# FASCICULE DE BREVET EUROPEEN

(11) **EP 3 723 980 B1**
(45) Date de publication et mention de la délivrance du brevet: **24.04.2024**
(21) Numéro de dépôt: 18833916.2
(22) Date de dépôt: 11.12.2018
(51) Int. Cl.: B32B 17/10

(54) **VITRAGE FEUILLETÉ AÉRONAUTIQUE À DÉFORMATION MINIMALE EN CAS DE RUPTURE DE TOUTES SES FEUILLES DE VERRE**
AERONAUTISCHE VERBUNDGLASSCHEIBE MIT MINIMALER VERFORMUNG BEIM BRUCH ALLER IHRER GLASSCHEIBEN
LAMINATED AERONAUTICAL GLAZING WITH MINIMAL DEFORMATION IN THE EVENT OF BREAKAGE OF ALL ITS GLASS SHEETS

(30) Priorité: 13.12.2017 FR 1762048
(43) Date de publication de la demande: 21.10.2020
(73) Titulaire: SAINT-GOBAIN GLASS FRANCE, 92400 Courbevoie (FR)
(72) Inventeur: TONDU, Thomas, 45110 SAINT-MARTIN D'ABBAT (FR); LAGO-GOMEZ, Cyril, 45460 BONNEE (FR)
(74) Mandataire: Saint-Gobain Recherche
(86) Numéro de dépôt international: PCT/FR2018/053206
(87) Numéro de publication internationale: WO 2019/115933

(56) Documents cités:
- EP-A1- 0 459 704
- WO-A1-2011/103801
- FR-A1- 2 175 910
- US-A1- 2007 060 465
- US-A1- 2014 087 193
- US-A1- 2015 064 374
- US-A1- 2016 002 103
- US-A1- 2017 348 945

## Description

Les vitrages aéronautiques des avions soumis aux exigences de résistance aux chocs oiseau et qui sont pressurisés (par exemple aviation commerciale) doivent supporter la casse d'un des plis structuraux du vitrage : la casse d'un des plis ne doit entraîner ni de perte du vitrage ni de dépressurisation du cockpit. Un pli désigne une feuille constitutive d'un vitrage feuilleté ; il peut s'agir d'une feuille de verre, ou d'une feuille de matériau polymère. On désigne par pli structural une feuille d'épaisseur suffisante pour être considérée comme participant à la solidité, à la résistance mécanique, résistance à la rupture de la structure.

Aucune exigence normative ne demande la résistance du vitrage feuilleté en cas de casse de tous les plis verriers. Néanmoins, dans une démarche de sécurisation croissante des vols, cette exigence peut être ajoutée par certains constructeurs.

Les vitrages en verre sont particulièrement exposés aux risques de dépressurisation en cas de casse de tous les plis verriers.

Les vitrages aéronautiques sont des vitrages feuilletés composés soit de feuilles de verres, soit de feuilles de matériaux polymères (typiquement poly(méthacrylate de méthyle) - PMMA - de qualité aéronautique), soit de feuilles de verre et de matériaux polymères assemblées entre elles par des adhésifs intercalaires (thermoplastiques tels que polyvinylbutyral - PVB -, polyuréthane - PU -). Les documents US 2007/060465 A1 et EP 0 459 704 A1 décrivent des vitrages feuilletés aéronautiques.

Dans le cas d'un vitrage en verre, la résistance aux chocs aux oiseaux est assurée par deux verres épais à très haute contrainte à rupture. Cette haute contrainte à rupture peut être obtenue par une forte trempe thermique mais de façon bien plus préférable par un renforcement chimique.

Les plis structuraux sont au nombre de deux, de telle façon qu'en cas de casse (quelle qu'en soit la raison) d'un de ces verres, le vitrage préserve sa résistance à la pressurisation interne du cockpit et continue d'assurer sa pressurisation.

Les vitrages dits boulonnés (liaison boulonnée entre vitrage et structure - carlingue de l'avion -) pour lesquels le vitrage est solidairement lié à la structure avion ne sont pas ou peu sensibles aux casses de tous les plis. C'est l'intercalaire qui joue alors le rôle de membrane qui gonfle sans rompre tout en assurant l'étanchéité. Les vitrages boulonnés peuvent avoir des plis structuraux en matériau polymère et donc directement percés pour l'attachement à la structure, ou des plis structuraux en verre auxquels sont collés en périphérie des inserts (métal et ou composites) percés permettant la liaison à la structure.

Les vitrages pincés ne sont liés à la structure que par pincement du joint périphérique du vitrage. En cas de casse de tous les plis la raideur du vitrage chute et ces vitrages risquent de déchausser.

Les vitrages boulonnés sont particulièrement chers :
- le PMMA aéronautique est un matériau cher ;
- le collage d'inserts sur vitrage verre est complexe.

Par ailleurs, le boulonnage induit de fortes sollicitations mécaniques du vitrage par la structure se déformant du fait de la pressurisation avion.

Les vitrages en verre présentent un fort renforcement de préférence chimique. Ce renforcement met les faces du verre en compression, et inévitablement le coeur en extension. Cette mise en extension du coeur provoque une fracturation totale du verre en cas d'amorce de casse locale. Plus la contrainte à coeur est élevée plus le verre casse en petits morceaux ; après casse de tous les plis, le feuilleté d'adhésifs intercalaires et de verre cassé s'en trouve d'autant plus assoupli.

Il y a donc une contradiction entre l'exigence de tenue au choc à l'oiseau qui nécessite des renforcements intenses du verre et le besoin de tenue à la pression en cas de casse de tous les plis.

Lorsque la partie structurale d'un vitrage feuilleté est constituée d'une feuille de verre extérieure (côté atmosphère extérieure) et d'une feuille de verre intérieure (côté cockpit d'un avion par exemple), et que ce vitrage feuilleté est soumis à un choc à l'oiseau, la surface du vitrage feuilleté qui reçoit le choc se déforme en formant une concavité et en créant une contrainte en compression ; la surface du vitrage feuilleté opposée au choc se déforme au contraire en formant une convexité et en créant une contrainte en extension. Or le verre est très performant en compression, même sans renforcement ; tout au contraire il est nécessaire de renforcer du verre dont une surface se déforme en extension. C'est donc ici la feuille structurale intérieure qui est soumise à des contraintes mécaniques d'extension importantes, la feuille structurale extérieure étant très sensiblement moins contrainte. Néanmoins la présence de cette feuille de verre extérieure moins contrainte raidit mécaniquement le vitrage feuilleté et limite la mise en contrainte de la feuille de verre intérieure.

L'invention consiste à différencier les propriétés mécaniques des deux plis structuraux en privilégiant
- la contrainte à rupture élevée (et donc fracturation en petits morceaux indésirable) pour le pli côté cockpit, le plus sollicité lors d'un choc oiseau ;
- une fragmentation large sur le pli structural le plus extérieur de l'avion (peu sollicité pendant le choc oiseau) de façon à limiter les déformations liées à la pression en cas de casse de tous les plis de verre.

Ce but est atteint par l'invention qui, en conséquence, a pour objet un vitrage feuilleté pour un véhicule ou un bâtiment, caractérisé en ce qu'il comprend une feuille de verre structurale intérieure ayant une contrainte de compression de surface comprise entre 400 et 1000 MPa avec des profondeurs d'échange entre 100 et 500, de préférence au moins égales à 150 µm et une feuille de verre structurale extérieure ayant une contrainte de compression de surface comprise entre 50 et 300 MPa avec des profondeurs d'échange entre 50 et 100 µm, à condition que le produit des deux soit au plus égal à 25000 MPa.µm.

En cas de choc à l'oiseau, la feuille de verre structurale intérieure, qui est la seule substantiellement sollicitée en extension, résiste bien eu égard à sa contrainte de compression de surface élevée, et permet de maintenir l'intégrité des deux plis structuraux du vitrage.

Si pour une toute autre raison toutes les feuilles de verre structurales venaient à se briser, par exemple suite à un défaut électrique, la feuille de verre structurale intérieure se briserait en petits morceaux et la feuille de verre structurale extérieure en morceaux de grandes dimensions, de sorte que le vitrage feuilleté tenu par la couche adhésive intercalaire collant les deux verres structuraux, fixée à la structure de montage par boulonnage ou pincement, serait relativement peu déformé. Dans le cas particulier du vitrage pincé, les faibles déformations du vitrage feuilleté soumis à la pressurisation du cockpit réduisent les risques de déchaussement du vitrage, particulièrement pour les vitrages de grande dimension.

Comme avantage secondaire du vitrage feuilleté de l'invention, la contrainte de compression de surface sur une profondeur élevée de la feuille de verre structurale intérieure lui confère une faible sensibilité à la rayure.

Selon d'autres caractéristiques préférées du vitrage feuilleté de l'invention :
- les feuilles de verre structurales intérieure et extérieure ont des épaisseurs identiques ou différentes comprises entre 3 et 20 mm, et la somme de leurs épaisseurs est comprise entre 10 et 20 mm ;
- les feuilles de verre structurales intérieure et extérieure sont du type sodocalcique ou aluminosilicate;
- les feuilles de verre structurales sont renforcées chimiquement ; le renforcement chimique consiste par exemple en la substitution d'ions sodium par des ions potassium, ou d'ions lithium par des ions sodium, c'est-à-dire chaque fois par des ions plus gros, à la surface des feuilles de verre; c'est ce qui augmente leur contrainte de compression de surface ;
- les feuilles de verre structurales intérieure et extérieure sont collées l'une à l'autre par l'intermédiaire d'une première couche adhésive intercalaire d'épaisseur comprise entre 0,5 et 5, de préférence entre 1,8 et 3,2 mm ;
- le vitrage feuilleté comprend, du côté de la feuille de verre structurale extérieure opposé à la feuille de verre structurale intérieure, une feuille de verre extérieure d'épaisseur comprise entre 0,5 et 5 mm ; cette feuille de verre extérieure, fine et non structurale, constitue la surface extérieure du vitrage feuilleté, en contact avec l'atmosphère extérieure ;
- la feuille de verre extérieure est de type sodocalcique ou aluminosilicate, comme les feuilles de verre structurales ;
- cette feuille de verre extérieure est semi-trempée ou renforcée chimiquement ;
- la feuille de verre extérieure est collée à la feuille de verre structurale extérieure par l'intermédiaire d'une seconde couche adhésive intercalaire d'épaisseur comprise entre 3 et 12 mm ;
- la face de la feuille de verre extérieure orientée vers la feuille de verre structurale extérieure supporte un réseau de fils chauffants et/ou une couche électroconductrice chauffante : fils de cuivre, couche d'oxyde d'indium dopé à l'étain ITO (en anglais : « indium tin oxide »), reliés à une alimentation électrique par l'intermédiaire de collecteurs (en anglais « bus-bars ») ; ce positionnement de la fonction de chauffage procure le dégivrage de la surface du vitrage feuilleté en contact avec l'atmosphère extérieure, dans toutes les conditions d'utilisation, en minimisant la puissance électrique requise (proximité du givre) ;
- une face de la feuille de verre structurale intérieure ou extérieure supporte un réseau de fils chauffants et/ou une couche électroconductrice chauffante tels que décrits ci-dessus ; ce positionnement de la fonction de chauffage procure le désembuage de la surface du vitrage feuilleté en contact avec l'atmosphère du cockpit de l'avion ;
- la face de la feuille de verre extérieure opposée à la feuille de verre structurale extérieure affleure à la structure de montage ; en d'autres termes, cette face est dans la continuité de la structure (carlingue de l'avion) ; une fonction essentielle de la feuille de verre extérieure est la performance aérodynamique de l'avion, et dans une moindre mesure la fonction d'aspect ;
- une couche adhésive intercalaire comprend un polyvinylbutyral (PVB), un polyuréthane (PU), un copolymère éthylène - acétate de vinyle (EVA) ou similaire ;
- le vitrage feuilleté est bombé (concavité vers l'intérieur du véhicule ou du bâtiment en position de montage) ;
- une feuille de renforcement est insérée entre les feuilles de verre structurales intérieure et extérieure, sur une partie au moins d'une zone périphérique du vitrage feuilleté ; il s'agit d'une bande de matériau de renforcement tel que métallique, composite à fibre (Kevlar^{®} ou similaire), selon une partie significative de la zone périphérique du vitrage feuilleté ; cette feuille de renforcement est soumise à la contrainte locale appliquée par le presse-glace et qui risquerait de casser localement le verre structural intérieur en petits morceaux ; la feuille de renforcement évite le déchirement de la couche adhésive intercalaire au niveau de la limite de contact entre presse-glace et vitrage.

L'invention a d'autre part pour objet l'application d'un vitrage feuilleté tel que décrit ci-dessus dans l'aéronautique, en particulier comme vitrage d'avion pressurisé.

L'invention est maintenant illustrée par l'exemple de réalisation suivant.

### Exemple

Un vitrage feuilleté de cockpit d'avion commercial pressurisé est constitué, de l'intérieur de l'avion vers l'extérieur :
- d'une feuille structurale intérieure de 8mm d'épaisseur de verre aluminosilicate avec un renforcement chimique générant une contrainte de surface de 450MPa pour une profondeur d'échange de 200µm ;
- d'une feuille structurale extérieure de 8mm d'épaisseur de verre sodocalcique avec un renforcement chimique générant une contrainte de surface de 250MPa pour une profondeur d'échange de 60µm ; et
- d'une feuille de verre sodocalcique extérieure de 3 mm d'épaisseur semi-trempée (contrainte de surface de 50 MPa).

Les deux feuilles de verre structurales sont collées par l'intermédiaire d'une couche adhésive intercalaire de PVB de 2 mm d'épaisseur.

La feuille de verre structurale extérieure et la feuille de verre extérieure sont collées par l'intermédiaire d'une couche adhésive intercalaire de PU de 10 mm d'épaisseur.

La face de la feuille de verre extérieure orientée vers la feuille de verre structurale extérieure porte une couche chauffante dégivrante d'ITO. C'est notamment le cas d'un vitrage antigivre frontal de cockpit d'avion. Comme précisé ci-dessus, dans le cas d'un vitrage désembuant, la fonction de chauffage peut être supportée par toute surface du bloc structural dans le feuilleté.

La face extérieure de la feuille de verre extérieure affleure à la carlingue de l'avion, environnement de montage du vitrage feuilleté.

En cas de bris des deux feuilles de verre structurales du vitrage feuilleté, la fragmentation large de la feuille de verre structurale extérieure, c'est-à-dire en morceaux de grandes dimensions, procure une déformation minimale du vitrage sous l'effet de la pression.

De plus cette éventualité de bris des deux feuilles de verre structurales est minimisée par leurs caractéristiques de contraintes de compression de surface.

## Revendications

1. Vitrage feuilleté pour un véhicule ou un bâtiment, **caractérisé en ce qu'**il comprend une feuille de verre structurale intérieure ayant une contrainte de compression de surface comprise entre 400 et 1000 MPa avec des profondeurs d'échange entre 100 et 500, de préférence au moins égales à 150 µm et une feuille de verre structurale extérieure ayant une contrainte de compression de surface comprise entre 50 et 300 MPa avec des profondeurs d'échange entre 50 et 100 µm, à condition que le produit des deux soit au plus égal à 25000 MPa.µm.

2. Vitrage feuilleté selon la revendication 1, **caractérisé en ce que** les feuilles de verre structurales intérieure et extérieure ont des épaisseurs identiques ou différentes comprises entre 3 et 20 mm, et **en ce que** la somme de leurs épaisseurs est comprise entre 10 et 20 mm.

3. Vitrage feuilleté selon l'une des revendications précédentes, **caractérisé en ce que** les feuilles de verre structurales intérieure et extérieure sont du type sodocalcique ou aluminosilicate.

4. Vitrage feuilleté selon l'une des revendications précédentes, **caractérisé en ce que** les feuilles de verre structurales sont renforcées chimiquement.

5. Vitrage feuilleté selon l'une des revendications précédentes, **caractérisé en ce que** les feuilles de verre structurales intérieure et extérieure sont collées l'une à l'autre par l'intermédiaire d'une première couche adhésive intercalaire d'épaisseur comprise entre 0,5 et 5, de préférence entre 1,8 et 3,2 mm.

6. Vitrage feuilleté selon l'une des revendications précédentes, **caractérisé en ce qu'**il comprend, du côté de la feuille de verre structurale extérieure opposé à la feuille de verre structurale intérieure, une feuille de verre extérieure d'épaisseur comprise entre 0,5 et 5 mm.

7. Vitrage feuilleté selon la revendication 6, **caractérisé en ce que** la feuille de verre extérieure est de type sodocalcique ou aluminosilicate.

8. Vitrage feuilleté selon la revendication 6, **caractérisé en ce que** la feuille de verre extérieure est semi-trempée ou renforcée chimiquement.

9. Vitrage feuilleté selon la revendication 6, **caractérisé en ce que** la feuille de verre extérieure est collée à la feuille de verre structurale extérieure par l'intermédiaire d'une seconde couche adhésive intercalaire d'épaisseur comprise entre 3 et 12 mm.

10. Vitrage feuilleté selon la revendication 6, **caractérisé en ce que** la face de la feuille de verre extérieure orientée vers la feuille de verre structurale extérieure supporte un réseau de fils chauffants et/ou une couche électroconductrice chauffante.

11. Vitrage feuilleté selon l'une des revendications précédentes, **caractérisé en ce qu'**une face de la feuille de verre structurale intérieure ou extérieure supporte un réseau de fils chauffants et/ou une couche électroconductrice chauffante.

12. Vitrage feuilleté selon la revendication 6, **caractérisé en ce que** la face de la feuille de verre extérieure opposée à la feuille de verre structurale extérieure affleure à la structure de montage.

13. Vitrage feuilleté selon l'une des revendications 5 ou 9, **caractérisé en ce qu'**une couche adhésive intercalaire comprend un polyvinylbutyral, un polyuréthane, un copolymère éthylène - acétate de vinyle ou similaire.

14. Vitrage feuilleté selon l'une des revendications précédentes, **caractérisé en ce qu'**il est bombé.

15. Vitrage feuilleté selon l'une des revendications précédentes, **caractérisé en ce qu'**une feuille de renforcement est insérée entre les feuilles de verre structurales intérieure et extérieure, sur une partie au moins d'une zone périphérique du vitrage feuilleté.

16. Application d'un vitrage feuilleté selon l'une des revendications précédentes dans l'aéronautique.

17. Application d'un vitrage feuilleté selon la revendication 16 comme vitrage d'avion pressurisé.

## Patentansprüche

1. Verbundverglasung für ein Fahrzeug oder ein Gebäude,
**dadurch gekennzeichnet, dass** sie eine innere strukturelle Glasscheibe, die eine Oberflächendruckspannung zwischen 400 und 1000 MPa mit Austauschtiefen zwischen 100 und 500, vorzugsweise mindestens gleich 150 µm besitzt, und eine äußere strukturelle Glasscheibe umfasst, die eine Oberflächendruckspannung zwischen 50 und 300 MPa mit Austauschtiefen zwischen 50 und 100 µm besitzt, mit der Maßgabe, dass das Produkt von beiden höchstens gleich 25.000 MPa.µm ist.

2. Verbundverglasung nach Anspruch 1, **dadurch gekennzeichnet, dass** die innere und die äußere strukturelle Glasscheibe identische oder unterschiedliche Dicken zwischen 3 und 20 mm aufweisen, und dass die Summe ihrer Dicken zwischen 10 und 20 mm liegt.

3. Verbundverglasung nach einem der vorstehenden Ansprüche,
**dadurch gekennzeichnet, dass** die innere und die äußere strukturelle Glasscheibe von der Art Natronkalk oder Aluminosilicat sind.

4. Verbundverglasung nach einem der vorstehenden Ansprüche,
**dadurch gekennzeichnet, dass** die strukturellen Glasscheiben chemisch verstärkt sind.

5. Verbundverglasung nach einem der vorstehenden Ansprüche,
**dadurch gekennzeichnet, dass** die innere und die äußere strukturelle Glasscheibe über eine erste Zwischenhaftschicht mit Dicke zwischen 0,5 und 5, vorzugsweise zwischen 1,8 und 3,2 mm aneinander kleben.

6. Verbundverglasung nach einem der vorstehenden Ansprüche,
**dadurch gekennzeichnet, dass** sie auf der Seite der äußeren strukturellen Glasscheibe gegenüber der inneren strukturellen Glasscheibe, eine äußere Glasscheibe mit Dicke zwischen 0,5 und 5 mm umfasst.

7. Verbundverglasung nach Anspruch 6, **dadurch gekennzeichnet, dass** die äußere Glasscheibe von der Art Natronkalk oder Aluminosilicat ist.

8. Verbundverglasung nach Anspruch 6, **dadurch gekennzeichnet, dass** die äußere Glasscheibe teilvorgespannt oder chemisch verstärkt ist.

9. Verbundverglasung nach Anspruch 6, **dadurch gekennzeichnet, dass** die äußere Glasscheibe an der äußeren strukturellen Glasscheibe über eine zweite Zwischenhaftschicht mit Dicke zwischen 3 und 12 mm klebt.

10. Verbundverglasung nach Anspruch 6, **dadurch gekennzeichnet, dass** die Fläche der äußeren Glasscheibe, die in Richtung der äußeren strukturellen Glasscheibe ausgerichtet ist, ein Netz von Heizdrähten und/oder eine heizende elektrisch leitfähige Schicht trägt.

11. Verbundverglasung nach einem der vorstehenden Ansprüche,
**dadurch gekennzeichnet, dass** die innere oder die äußere strukturelle Glasscheibe ein Netz von Heizdrähten und/oder eine heizende elektrisch leitfähige Schicht trägt.

12. Verbundverglasung nach Anspruch 6, **dadurch gekennzeichnet, dass** die Fläche der äußeren Glasscheibe gegenüber der äußeren strukturellen Glasscheibe mit der Montagestruktur bündig ist.

13. Verbundverglasung nach einem der Ansprüche 5 bis 9,
**dadurch gekennzeichnet, dass** eine Zwischenhaftschicht Polyvinylbutyral, Polyurethan, Ethylen-Vinylacetat-Copolymer oder ähnliches umfasst.

14. Verbundverglasung nach einem der vorstehenden Ansprüche,
**dadurch gekennzeichnet, dass** sie gewölbt ist.

15. Verbundverglasung nach einem der vorstehenden Ansprüche,
**dadurch gekennzeichnet, dass** eine Verstärkungsscheibe zwischen der inneren und der äußeren strukturellen Glasscheibe auf einem Teil mindestens einer Umfangszone der Verbundverglasung eingeschoben ist.

16. Anwendung einer Verbundverglasung nach einem der vorstehenden Ansprüche in der Luftfahrt.

17. Anwendung einer Verbundverglasung nach Anspruch 16 als Verbundverglasung eines druckbeaufschlagten Luftfahrzeugs.

## Claims

1. A laminated glazing for a vehicle or a building, **characterized in that** it comprises an inner structural glass sheet having a surface compressive stress of between 400 and 1000 MPa with exchange depths of between 100 and 500, preferably at least equal to 150 µm and an outer structural glass sheet having a surface compressive stress of between 50 and 300 MPa with exchange depths of between 50 and 100 µm, on condition that the product of the two is at most equal to 25 000 MPa.µm.

2. The laminated glazing as claimed in claim 1, **characterized in that** the inner and outer structural glass sheets have identical or different thicknesses of between 3 and 20 mm, and **in that** the sum of their thicknesses is between 10 and 20 mm.

3. The laminated glazing as claimed in either of the preceding claims, **characterized in that** the inner and outer structural glass sheets are of soda-lime or aluminosilicate type.

4. The laminated glazing as claimed in one of the preceding claims, **characterized in that** the structural glass sheets are chemically reinforced.

5. The laminated glazing as claimed in one of the preceding claims, **characterized in that** the inner and outer structural glass sheets are bonded to one another by means of a first adhesive interlayer having a thickness of between 0.5 and 5, preferably between 1.8 and 3.2 mm.

6. The laminated glazing as claimed in one of the preceding claims, **characterized in that** it comprises, on the side of the outer structural glass sheet opposite the inner structural glass sheet, an outer glass sheet having a thickness between 0.5 and 5 mm.

7. The laminated glazing as claimed in claim 6, **characterized in that** the outer glass sheet is of soda-lime or aluminosilicate type.

8. The laminated glazing as claimed in claim 6, **characterized in that** the outer glass sheet is semi-tempered or chemically reinforced.

9. The laminated glazing as claimed in claim 6, **characterized in that** the outer glass sheet is bonded to the outer structural glass sheet by means of a second adhesive interlayer having a thickness of between 3 and 12 mm.

10. The laminated glazing as claimed in claim 6, **characterized in that** the face of the outer glass sheet oriented toward the outer structural glass sheet supports a network of heating wires and/or an electrically-conductive heating layer.

11. The laminated glazing as claimed in one of the preceding claims, **characterized in that** one face of the inner or outer structural glass sheet supports a network of heating wires and/or an electrically-conductive heating layer.

12. The laminated glazing as claimed in claim 6, **characterized in that** the face of the outer glass sheet opposite the outer structural glass sheet is flush with the assembly structure.

13. The laminated glazing as claimed in either of claims 5 and 9, **characterized in that** an adhesive interlayer comprises a polyvinyl butyral, a polyurethane, an ethylene/vinyl acetate copolymer or the like.

14. The laminated glazing as claimed in one of the preceding claims, **characterized in that** it is curved.

15. The laminated glazing as claimed in one of the preceding claims, **characterized in that** a reinforcing sheet is inserted between the inner and outer structural glass sheets, over a portion at least of a peripheral zone of the laminated glazing.

16. The use of a laminated glazing as claimed in one of the preceding claims in aeronautics.

17. The use of a laminated glazing as claimed in claim 16, as pressurized aircraft glazing.
